# EUROPÄISCHE PATENTSCHRIFT

(11) **EP 2 354 379 B1**
(45) Veröffentlichungstag und Bekanntmachung des Hinweises auf die Patenterteilung: **07.09.2016**
(21) Anmeldenummer: 11000989.1
(22) Anmeldetag: 08.02.2011
(51) Int. Cl.: E04H 7/06, E04H 7/30, B23K 9/035

(54) **Behälter mit Flanschverbindungen und geschweißter Innennaht, insbesondere Silo**
Container with flange connection and welded inner seam, in particular silo
Récipient doté de brides de liaison et d'une liaison interne soudée, notamment un silo

(30) Priorität: 08.02.2010 DE 102010007291
(43) Veröffentlichungstag der Anmeldung: 10.08.2011
(73) Patentinhaber: Zeppelin Silos & Systems GmbH, 88045 Friedrichshafen (DE)
(72) Erfinder: Ameringer, Roger, 88045 Friedrichshafen (DE); Boneberger, Alois, 88299 Leutkirch (DE); Kiefer, Josef, 88090 Immenstaad (DE); Wilms, Harald, Dr., 88069 Tettnang (DE)
(74) Vertreter: Riebling, Peter

(56) Entgegenhaltungen:
- WO-A1-2004/090263
- DE-A1- 3 038 517
- DE-A1-102008 029 059
- US-A- 2 684 170

## Beschreibung

Die Erfindung betrifft einen Behälter nach dem Oberbegriff des Patentanspruchs 1, wobei der Behälter aus Segmenten hergestellt wird und die Segmente über Flanschverbindungen miteinander verbunden werden und mit einer die Bleche verbindenden geschweißten Naht, die auf der Gegenseite der Flanschverbindung angeordnet ist, versehen werden. Besagter Behälter dient zur Lagerung und Bevorratung von Fluiden oder Schüttgütern.

Das Anwendungsgebiet der vorliegenden Erfindung sind somit alle Behälter, insbesondere Silos und Tanks und hierunter insbesondere aus Segmenten montierte Behälter, deren Innenraum unter Atmosphärendruck, Überdruck oder Unterdruck steht, sowie Rohrleitungen mit großem Durchmesser und rohrförmige Tragkonstruktionen, beispielsweise Türme für Windräder oder Masten.

Um die Kosten für den Transport von Behältern über längere Entfernungen zu minimieren, werden diese in Segmenten vorgefertigt und auf der Baustelle zusammengebaut. Bei den Verbindungen der einzelnen Segmente derartiger Behälter war die mechanische Kraftübertragung und somit die Festigkeit des Behälters gegen innere und äußere Belastungen über Schweißverbindungen gewährleistet. Die Schweißnaht zwischen den einzelnen Segmenten in der Dicke der Bleche erfolgte bisher bei Behältern ohne Flanschverbindungen entweder einseitig von innen oder beidseitig mit Schweißnähten in der Dicke der Bleche oder bei Behältern mit Flanschverbindungen von der Innenseite her direkt auf den Spalt zwischen den Flanschen, die wiederum über Kehlnähte mit der Außenseite der Behälterwand verbunden waren. Der Begriff Flanschverbindung steht dabei sowohl für die Verbindung einzelner, aus Segmenten hergestellter Ringe, als auch für die Verbindung einzelner Segmente zu einem Ring, also für das Fügen der Segmente in Umfangs- und Längsrichtung. Die Flanschblätter sind somit entweder -in Behälterlängsachsevertikal verlaufende Längs- oder -in Behälterumfangsrichtung- horizontal umlaufende Ring-Flansche.

Schweißnähte haben, sofern sie nicht einer umfangreichen Qualitätsprüfung durch unterschiedliche Verfahren wie beispielsweise Röntgen- oder Ultraschallprüfung unterzogen werden, eine geringere anzusetzende Tragkraft (Festigkeit, Stabilität) als der Grundwerkstoff der Bleche selbst. Aus diesem Grund muss die Blechstärke so dick gewählt werden, dass die Schweißnaht nach der Abminderung durch den Schweißnahtfaktor immer noch der erforderlichen Mindestblechstärke entspricht. Da die Schweißnaht nur einen sehr geringen Anteil der Oberfläche ausmacht, muss die Behälterwand in allen anderen Bereichen überdimensioniert werden, was zu nicht unerheblichen Mehrkosten führt.

Mit der Anbringung der Schweißnaht bei Behältern mit Flanschen direkt fluchtend zum Spalt zwischen sich berührenden Flanschflächen besteht der Nachteil, dass eine Kerbwirkung durch die Fuge zwischen den beiden Flanschflächen der aufeinander liegenden Flansche in Richtung auf die Schweißnaht entsteht. Es kann eine Rissbildung von dieser Kerbe aus erfolgen, die sich in die Schweißnaht hinein erstreckt, wobei eine solche Rissbildung sowohl unter statischen aber insbesondere unter dynamischen Bedingungen entstehen kann. Dadurch bestand eine größere Gefahr des Versagens der Schweißnaht, auf jeden Fall aber bestand der Nachteil, dass sich die vorher genannte Kerbwirkung negativ auf die Qualität der Schweißnaht auswirkte und ein vollständiges Durchschweißen nicht gewährleistet ist. Dies bewirkt eine geringere Schweißnahtgüte, somit einen kleineren Schweißnahtfaktor und damit letztendlich einer größere Dicke der Wandbleche bzw. Segmente.

Darüber hinaus war eine Schweißbadsicherung nicht ohne weiteres möglich. Unter dem Begriff Schweißbadsicherung wird verstanden, dass an der Wurzel der Schweißnaht eine Nut angeordnet ist, in welche sich die Schweißnahtwurzel hinein erstrecken kann, um so eine stabile, durch die gesamte Blechdicke hindurch tragende Schweißnaht auszubilden. Damit bestand der Nachteil, dass sich die vorher genannte Kerbwirkung negativ auf die Qualität der Schweißnaht auswirkte und eine eindeutige Durchschweißung nicht gesichert ist.

Zur Beschreibung des Standes der Technik und der vorliegenden Erfindung wird in der folgenden Beschreibung von der Montage eines Behälters ausgegangen, wobei die Erfindung hierauf nicht beschränkt ist. Die Beschränkung auf Begriffe, die zu einem Behälter gehören, soll den Schutzbereich der Erfindung nicht einschränken und u. a. insbesondere Rohr- oder Mast-förmige Konstruktionen nicht ausschließen. Dies erfolgt nur der einfacheren Beschreibung wegen. Der Schutzbereich der Erfindung bezieht sich demgemäß auf sämtliche Behälter und zylindrische oder konische Konstruktionen, die durch Flanschverbindungen miteinander verbunden sind

Gemäß dem Stand der Technik ist es bekannt, die leicht gekrümmten, aus Blech gefertigten und mit Flanschblättern umrahmten Segmente des Behälters jeweils stirnseitig zusammenzuführen, um in diesem Bereich die lastübertragende und dichtende Schweißnaht anzubringen. Bisher war es lediglich bekannt, in diesem Bereich der Zusammenführung der Wände (stirnseitiger Berührungsbereich der Wandung des Behälters) auch die Flanschverbindung fluchtend anzuschließen, so dass die Berührungsfläche der einander zugeordneten Flansche (Längs- oder Ringflansche) gleichzeitig mit der Berührungsfläche der Stirnseiten der Silowände fluchtete. Es bestand also kein Versatz zwischen der Berührungsebene der Wände des Behälters und der Berührungsebene der Längs- oder Ringflansche. Weiterhin ergab sich beim Verschweißen von innen nicht nur keine definierte Badsicherung, sondern auch noch die bereits erwähnte Kerbwirkung durch die Fuge zwischen den beiden sich berührenden Flanschblättern. Beim Stand der Technik war es weiterhin nicht möglich, eine derartige mittige Schweißnaht zu röntgen und nur schwer möglich, eine Ultraschallprüfung vorzunehmen, weil die Flanschprofile zusätzliche Reflektionen verursachen.

Der Erfindung liegt deshalb die Aufgabe zu Grunde, einen dem Prinzip nach bekannten Behälter mit Flanschverbindungen und einer geschweißten Innen- oder Außennaht so weiter zu bilden, dass die Schweißverbindung eine höhere Wertigkeit erreicht und eine überlegene Festigkeit aufweist, so dass die ansonsten erforderliche Verdickung der Wandbleche entfallen kann.

Zur Lösung der gestellten Aufgabe ist die Erfindung durch die technische Lehre der Ansprüche 1 und 10 gekennzeichnet.

Ein Bestandteil der neuen Idee ist, die Fügestelle der Silobleche seitlich versetzt zur Fügefläche der Montageflansche zu legen und im Montageflansch eine silowandseitige Nutvertiefung für die Schweißnaht anzuordnen. Damit wird eine Kerbwirkung auf die Schweißnaht vermieden und durch die Vertiefung ergibt sich eine Schweißbadsicherung und damit eine eindeutige Durchschweißung.

Ein weiterer Bestandteil gemäß dem unabhängigen Anspruch 10 ist, bei bestimmter Ausbildung der Montageflanschverbindung eine zusätzliche Tragwirkung durch Verschweißen der Montageflansche in ihrer Berührungsfläche zu erzielen, um damit eine gegenüber dem Wandblech verdickte Schweißnaht zu erreichen. Dadurch kann die durch den Schweißnahtfaktor erforderliche Verdickung des Wandbleches entfallen.

Hierbei ist wesentlich, dass die beiden Flansche gemeinsam eine zur Schweißnaht geöffnete Nut aufweisen, und dass sich die Schweißnaht in diese Nut im Bereich der gemeinsamen Berührfläche der Verbindungsflansche hinein erstreckt, wodurch sich die zusätzliche tragende Wirkung der miteinander verschweißten Flansche ergibt.

Ein Versatz zwischen der Fuge zwischen den Flanschprofilen und der Schweißnaht ist aus der DE 3038517 A1 und der WO 2008 112767 A1 bekannt, jedoch wird nach diesem Stand der Technik nicht eine Verdickung der Schweißnaht erzielt. Insbesondere ist bei der dargestellten Verbindung keine Nut vorhanden, die der die Bleche verbindende Schweißnaht zugeordnet ist. Dadurch kann nicht die volle Blechstärke als tragende Schweißnahtdicke genutzt werden. Die fehlende Nut behindert auch die Entgasung der Schweißnaht während des Schweißens in deren Wurzelbereich, wodurch die Schweißnahtqualität abgemindert ist.

Aus der DE 1481070 A ist weiterhin bekannt, einen rechteckigen Behälter aus Segmenten zu fertigen, wobei die Kraftübertragung an den Flanschen durch ein Verbindungselement erfolgt und eine Schweißnaht zum Abdichten des Behälters von außen angebracht wird. Die Schweißnaht stellt dabei kein kraftübertragendes Element dar, sondern wird deshalb von außen angebracht, um eine innere Beschichtung nicht zu verletzen. Hierbei sind demnach insbesondere die Schweißnaht als auch die kraftübertragende Verbindung auf der gleichen Seite der Behälterwand, in diesem Fall von außen. Bei der vorliegenden Erfindung liegen jedoch Schweißnaht und Flanschverbindung an unterschiedlichen Seiten der Behälterwand.

In der DE 8533999 U1 wird ein Ausrichtwerkzeug dargestellt, das zur einfachen Montage von Behältern aus geflanschten Segmenten verwendet wird, wobei eine besondere Profilnut zum Einsetzen des Ausrichtwerkzeuges relevant ist.

Hinsichtlich der Nutausbildung hinter einer Schweißnaht lehrt beispielsweise die DE 18053507 B, einen Hinterlegstreifen zum Verhindern des Durchsackens der Schweißnaht zu verwenden. Im Gegensatz zur vorliegenden Erfindung handelt es sich bei dem dortigen Hinterlegstreifen jedoch nicht um fest mit dem Behälter verbundene Bauteile, da sie auch aus einem anderen, nicht verschweißbaren Werkstoff bestehen. Auch wenn in US 2684170 A der Hinterlegstreifen aus der gleichen Legierung wie die zu verbindenden Bleche besteht, so dient dieser Hinterlegstreifen lediglich als Barriere zur Verhinderung des Aufmischens mit dem anderen (niederwertigen) Werkstoff der Flanschstruktur und ist kein Bestandteil der tragenden Schweißnahtverbindung.

Die Erfindung betrifft deshalb einen Behälter, der aus in der Werkstatt hergestellten Segmenten mit umlaufenden Flanschblättern aus angeschweißten Spezialprofilen montiert wird. Dabei sind die Flanschblätter mit Bohrungen versehen, die bei der Montage eine Verbindung mittels Schraub- oder Nietverbindungen ermöglichen, bevor anschließend eine einseitige Verschweißung erfolgt. Während es für viele Anwendungen (z.B. Lagersilos) erforderlich ist, die Flanschblätter an der Außenseite zu montieren und die Verschweißung von innen her vorzunehmen, so ist bei anderen Anwendungen (z.B. Tragkonstruktionen) auch die Anordnung der Flanschblätter auf der Innenseite und die Verschweißung von außen denkbar.

Die Erfindung weist folgende Merkmale auf, die am Beispiel eines runden Silos veranschaulicht werden:
1. Behälter (1), insbesondere Rundsilo, bei dem die vertikalen (2) und horizontalen (3) Verbindungen der Segmente (4), die von angeschweißten Vertikalflanschen (5) und Ringflanschen (6) umrahmt sind, von innen ausgeschweißt werden, dadurch gekennzeichnet, dass die einseitige Schweißnaht nicht in einen Spalt zwischen den Verbindungsflanschen (5.1 und 5.2 sowie 6.1 und 6.2) geschweißt wird, der wie eine Kerbe wirken kann, sondern in eine Nut (7) in einem der Flanschblätter, also dem Vertikalflansch (5.1) bzw. dem Ringflansch (6.1).
2. Um dies bei der Vertikalflanschverbindung (8) bzw. der Ringflanschverbindung (9) zu erreichen, wird der Vertikalflansch (5.1) bzw. der Ringflansch (6.1) nicht mit der Blechkante (10) fluchtend an dem Blech (11.1.) angeschweißt, sondern steht soweit über die Blechkante (10) hinaus, dass die Mitte der Nut (7) im Flanschprofil (5.1) mit der Blechkante (10) bzw. der Mitte der Vertikalnut (12) bzw. Rundnut (13) zur Schweißnahtvorbereitung fluchtet. Zwischen der Blechkante (10) und der Berührfläche (14) zwischen den Flanschen (5.1 und 5.2 bzw. 6.1 und 6.2) ergibt sich dadurch der Versatz (15).
3. Für die Badsicherung ist eine Nut (7) im Vertikalflansch (5.1) bzw. im Ringflansch (6.1) eingebracht, damit eine gute, sichere Durchschweißung gewährleistet ist.
4. Die Vertikalflansche (5.1 und 5.2) sowie die Ringflansche (6.1 und 6.2) sind mit den Blechen (11.1 und 11.2) über die Kehlnähte (16, 17) verbunden. Die Verbindungen zwischen den Vertikalflanschen (5.1 und 5.2) bzw. Ringflanschen (6.1 und 6.2) wird über die Bohrung (18) mit einer Niet- oder Schraubverbindung (19) realisiert.
5. Die Vertikalnut (12) und die Rundnut (13) können je nach Werkstoff, Schweißverfahren und Blechdicke unterschiedlich ausgeführt werden. Vorteilhaft sind neben dem einfachen Schlitz (12a, 13a) eine V-förmige Vorbereitung (12b, 13b) oder eine U-förmige Vorbereitung (12c, 13c).
6. In einer alternativen Ausführung wird die Kerbwirkung der Berührfläche (14) zwischen den Flanschen dadurch verhindert, dass die Flanschprofile (21.1 und 21.2) profiliert sind und die Schweißnahtwurzel (22) bis in den Grund (23) der Profilierung des Flanschprofils (21.2) geführt wird. Damit entsteht in Belastungsrichtung keine Kerbe in der Schweißnahtwurzel. Diese Ausführung ist sowohl für die vertikale Verbindung (2) von gewölbten Blechen (11) als auch für die horizontale Verbindung (3) anwendbar.
7. In einer alternativen Ausführung wird zwar die Schweißnaht in Höhe der Berührfläche (14) zwischen den Flanschringen angebracht, aber bis tief in die Nut (7) der Flanschringe (5 bzw. 6) hineingeschweißt, um so eine mittragende Wirkung der Flanschringe zu erzielen. Die Flansche (5, 6) sind wiederum über Kehlnähte (16) mit den Wandblechen verschweißt. Die zusätzliche Tiefe (24) der Schweißnaht in den Flanschen (5 bzw. 6) und damit ihre tragende Wirkung entspricht dabei der tragenden Dicke der Kehlnähte (16). Auch diese Ausführung ist sowohl für die vertikale Verbindung (2) von gewölbten Blechen (11) als auch für die horizontale Verbindung (3) anwendbar.
8. In dieser alternativen Ausführung werden die Flanschprofile (5,6) jeweils durch zwei Schweißnähte an den Blechen (11) der Segmente (4) angeschlossen, nämlich erstens über die Kehlnähte (16) und zweitens über die Schweißnaht (26). Dadurch erhöht sich die Qualität der Verbindung beträchtlich und erlaubt - auch ohne Berücksichtigung der mittragenden Wirkung der Verbindungselemente (19) einen Kraftfluss von einem Blech (11.1) zum anderen Blech (11.2).
9. Die Schweißnahtvorbereitung kann wiederum stumpf, V-förmig oder U-förmig ausgeführt werden. Besonders vorteilhaft ist die Ausbildung der Nut (7) mit einer in Schweißnahtrichtung verlaufenden Rundnut (25) hinter der eigentlichen Nut (7), um jegliche Kerbwirkung auszuschließen.
10. Die Schweißnähte erhalten durch alle beschriebenen Ausführungen eine größere tragende Dicke und somit eine höhere Schweißnahtgüte. Die dickere Schweißnaht resultiert in Verbindung mit den Flanschen und den Kehlnähten eine Erhöhung des tragenden Querschnittes.
11. Bei allen Ausführungen können noch besondere Profilierungen der Flansche vorgenommen werden, um die Steifigkeit zu erhöhen, um Montagehilfsmittel anzusetzen und um das Drehen der Behälter während der Montage und des Schweißens zu vereinfachen.
12. Die Schweißnähte und somit das ganze Silo hält höhere statische und dynamische Lasten aus (geringere Kerbwirkung).
13. Da die Schweißnähte eine feste Verbindung mit den Flanschen (5,6) eingehen, ist eine Prüfbarkeit der Schweißnähte gegeben.

Die Erfindung beruht auf der Tatsache, dass nach gültigen Vorschriften die Dicke der Bleche nach der durch den Schweißnahtfaktor abgeminderten Tragfähigkeit der Schweißverbindung festgelegt wird. Dadurch sind die Bleche - außerhalb der Schweißnahtzone- überdimensioniert. Dies Problem lässt sich nur dadurch umgehen, dass mit einem erheblichen Prüfaufwand der Schweißnahtfaktor auf 1,0 (100%) gesetzt werden darf. Schweißnähte bei Behältern herkömmlicher Ausführung sind nur einseitig ausgeführt und aufgrund der Fuge im Flansch besonders rissgefährdet. Der Schweißnahtfaktor liegt deshalb nach ASME nur bei 0.60. Verbindungen mit einseitig geschweißter Verbindung müssen bei Wechselbeanspruchung nach AD-2000 im Spannungsniveau weiter abgemindert werden, was ebenfalls einer weiteren Verringerung des Schweißnahtfaktors entspricht.

Der Einfluss des Schweißnahtfaktors auf die zu wählende Blechstärke soll an einem Beispiel verdeutlich werden. Hier ist angenommen, dass eine Blechstärke von 10 mm ausreichend ist. In Abhängigkeit vom Schweißnahtfaktor ist die wirkliche Wandstärke wegen der verschwächenden Wirkung der Schweißnaht mit bis zu 17 mm (Schweißnahtfaktor 60%) auszuführen. Dabei ist diese Wandstärke nur im Bereich der Schweißnaht erforderlich, kann aber ja fertigungstechnisch im restlichen Bereich der Wand nur schwerlich reduziert werden.

Die erfindungsgemäße Modifikation der Flansch-Verbindung bei Behältern bietet nun die Möglichkeit, die zusätzlich erforderliche Schweißnahtdicke in den Bereich der Flansch-Verbindung zu legen und auf diesen Bereich zu beschränken und somit nicht eine zusätzliche Verstärkung der Bleche in der gesamten Länge vornehmen zu müssen, nur um dadurch im Bereich der Schweißnähte die erforderliche Verdickung zu bekommen.

Ziel der Erfindung ist es, den Flanschring, der als Montagevorrichtung ohnehin am Silo angeschweißt werden muss, mit als tragenden Bestandteil der Schweißnaht zu nutzen. In den später beschriebenen Zeichnungen ist eine Silowand-Flansch-Schweißnaht-Verbindung gezeigt, bei der die tragende Dicke der Schweißnaht gegenüber der reinen Silowandstärke dadurch erhöht wird, dass die Schweißnaht bis tief in den Flanschring hinein geschweißt wird. Die Tiefe der Schweißnahtfuge im Flanschring muss dabei mit dem "a-Maß" der Kehlnaht zwischen Flanschring und Silowand korrespondieren. Da der zusätzliche Kraftfluss über den Flanschring nur über die äußeren Kehlnähte erfolgen kann, muss diese Schweißnaht bei dickeren Blechen gegebenenfalls etwas dicker ausgeführt werden.

Durch diese neuartige Form der Schweißverbindung ist die Verschwächung im Bereich der Schweißnaht nicht gegeben, denn der Flanschring, der selbst ebenfalls mit der Silowand verschweißt ist, bildet lokal eine Verstärkung der Wandstärke und somit der tragenden Wirkung der Schweißnaht.

Die Tiefe der ausgeschweißten Fuge im Flanschring kompensiert die Verschwächung aufgrund des Schweißnahtfaktors.

Gemäß dem obigen Beispiel muss die zusätzliche tragende Tiefe bei einem 10 mm Blech und einem Schweißnahtfaktor von 70% 5 mm betragen. Damit ist dann die Schweißnaht 15 mm dick. Dies konnte bisher nur dadurch realisiert werden, dass das gesamte Blech in 15 mm Stärke ausgeführt wird.

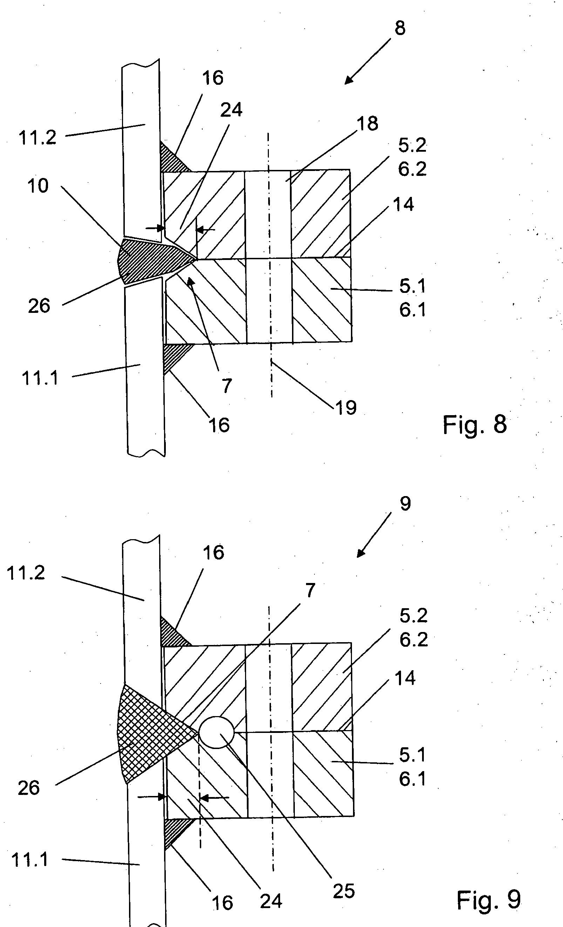

Alternativ besteht gemäß dieser Erfindung nun die Möglichkeit, das Blech weiterhin in 10 mm auszuführen und die zusätzlichen 5 mm der Schweißnaht in den Flanschbereich zu legen. Dabei muss sicher gestellt sein, dass der Kraftfluss zumindest teilweise auf den Flanschring umgelenkt wird. Sofern der Kraftfluss über ein 45 Grad-Dreieck (keilförmige Ansätze an den Verbindungsflanschen) nach oben abgetragen werden kann, kann dies gewährleistet werden, wenn der Flanschring außerhalb der Schweißnaht-Einflußzonen ebenfalls mindestens 5 mm dick ist. Selbst wenn dadurch der Flanschring etwas dicker werden sollte, ist die Materialeinsparung auf der Zylinderlänge immer noch signifikant. Durch diese Schweißnahtausführung nach den später zu beschreibenden Figuren 8 und 9 mit der tiefer ausgeschweißten Schweißfuge, die fluchtend zur Berührungsebene der Flanschringe verläuft, wird die Schweißnaht zwar auch nicht prüffähig, aber sie erfüllt mit einer geringeren Blechdicke die Anforderungen.

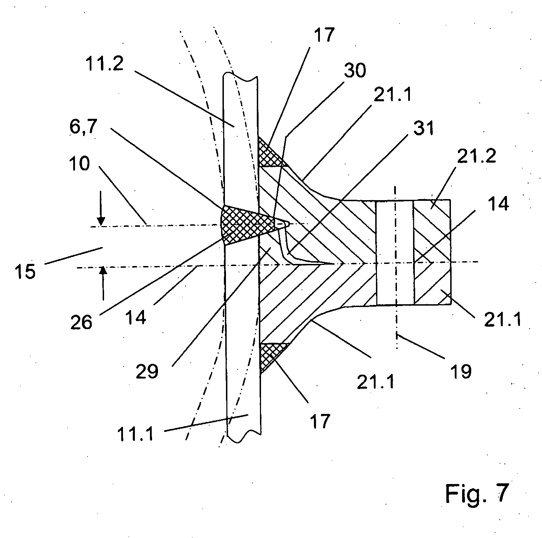

Hierbei ist die Schweißnaht-Vertiefung gezielt auf den Schweißnahtfaktor abgestimmt und nicht eine zufällig in den Flansch tiefer geschweißte Fuge. Der Flansch benötigt deshalb auch ein anderes Sonderprofil (vgl. Figur 7), bei dem sowohl die Hinterschneidung der Ecke als auch die Aussparungsphase an der Trennfuge berücksichtigt ist. Mit dieser Form des Flanschprofils kann die Blechdicke beim Bau von Behältern verringert werden.

Demgemäß ist es mit der Erfindung gemäß dem Anspruch 1 möglich, die Wertigkeit der Schweißnaht gegenüber dem Stand der Technik in entscheidendem Maß zu erhöhen. Mit den Schweißnähten nach der vorliegenden Erfindung gelingt es, eine Wertigkeit im Bereich von 0,8 bis 1,0 zu erreichen. Der Vorteil der Erfindung liegt auch darin, dass nun erstmals eine Badsicherung angeordnet werden kann, die außerhalb der Berührungsebene der Flansche liegt.

Der Vorteil der vorliegenden Erfindung ist demgemäß, dass nun durch den erfindungsgemäßen Versatz zwischen der Schweißnahtebene und der Ebene der miteinander verbundenen Flansche es erstmals möglich ist, die Schweißnaht von Kerbwirkungen freizuhalten, die ansonsten die Schweißnahtqualität beeinträchtigen würden.

Nach dem Gegenstand des Anspruches 10 ist vorgesehen, dass sich die Schweißnaht und die Wurzel in die Badsicherung hinein erstrecken und dadurch eine höhere tragende Dicke erreicht wird. Besonders vorteilhaft im Hinblick auf die vergrößerte Tragfähigkeit ist, wenn dadurch die Dicke der Schweißnaht um 30-50% gegenüber der Wandstärke der Bleche vergrößert wird.

Wenn in der vorliegenden Beschreibung von "Verbindungsflanschen" die Rede ist, so sind hier wahlweise die Vertikal- und auch die Ringflansche der vorliegenden Erfindung gemeint und der Begriff wird deshalb allgemein für beide Arten von Flanschen verwendet.

Ebenso werden alle Teile, die für die beiden Arten von Flanschen angewendet werden können, mit den gleichen Bezugszeichen versehen.

Vorteil der vorliegenden Erfindung ist, dass die Schweißnaht (z.B. mit Ultraschall) prüfbar ist, denn bei der US-Prüfung entstehen keine störenden Reflektionen, die anderenfalls von den versetzt zur Schweißnaht angeordneten Berührungsflächen der Verbindungsflansche ausgehen. Diese Berührungsflächen werden deshalb nicht mehr in die US-Prüfung einbezogen. Damit kann die Schweißnaht isoliert geprüft werden, ohne dass es zu störenden Reflektionen von den dahinter liegenden Berührungsflächen der Verbindungsflansche kommt.

Mit der vorliegenden Erfindung ergeben sich deshalb die folgenden Vorteile für den Bau von Behältern, großen Rohren und Tragkonstruktionen:
Die tiefere Schweißnaht resultiert in einer Erhöhung des tragenden Querschnitts und damit eine Verbesserung der Festigkeit, wobei gleichzeitig eine bessere Prüfbarkeit der erfindungsgemäßen Schweißnahtverbindung möglich ist.

Die erfindungsgemäßen Verbindungen betreffen:
- horizontale und vertikale Trennstellen am Mantel des Behälters
- horizontale und vertikale Trennstellen am Kegel des Behälters
- Trennstellen am Dach des Behälters
- Trennstellen in der Standzarge des Behälters

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schematisiert einen Behälter mit kegelförmigem Boden und kegelförmigem Dach nach der Erfindung
- Figur 2:: Eine Detaildarstellung gem. dem Schnitt C-C in Figur 1 bezüglich einer Vertikalflanschung des Behälters
- Figur 3:: Ein gegenüber Figur 2 abgewandeltes Ausführungsbeispiel der Zusammenführung der Außenwände des Behälters.
- Figur 4:: Ein gegenüber Figur 3 abgewandeltes Ausführungsbeispiel
- Figur 5:: Ein weiteres gegenüber Figur 3 abgewandeltes Ausführungsbeispiel
- Figur 6:: Schnitt gem. der Linie B-B durch eine Ringflanschung im Behälter
- Figur 7:: Eingängige Figuren 2 und 6 weiter abgewandeltes Ausführungsbeispiel mit ineinander greifenden, profilierten Flanschen
- Figur 8:: ein abgewandeltes Ausführungsbeispiel, bei dem die Schweißnaht fluchtend zur Berührungsebene der Flansche angeordnet ist.
- Figur 9:: das Beispiel nach Figur 8 mit einer anderen Form der Schweißnahtvorbereitung

Als Ausführungsbeispiel wird in der vorliegenden Erfindung die Montage eines Rundbehälters 1 erläutert, welches aus einzelnen Segmenten (4) mittels der Flanschen 5 und 6 an den vertikalen Verbindungen 2 und den horizontalen Verbindungen 3 miteinander verbunden werden.

Wichtig ist, dass die Flanschverbindungen, die als Montagehilfen ohnehin vorhanden sein müssen, teilweise im Rahmen ihrer ohnehin vorhandenen Schweißverbindungen eine mitragende Funktion bekommen oder als gezielte Schweißbadsicherung zu einer Verbesserung der Schweißnahtgüte beitragen.

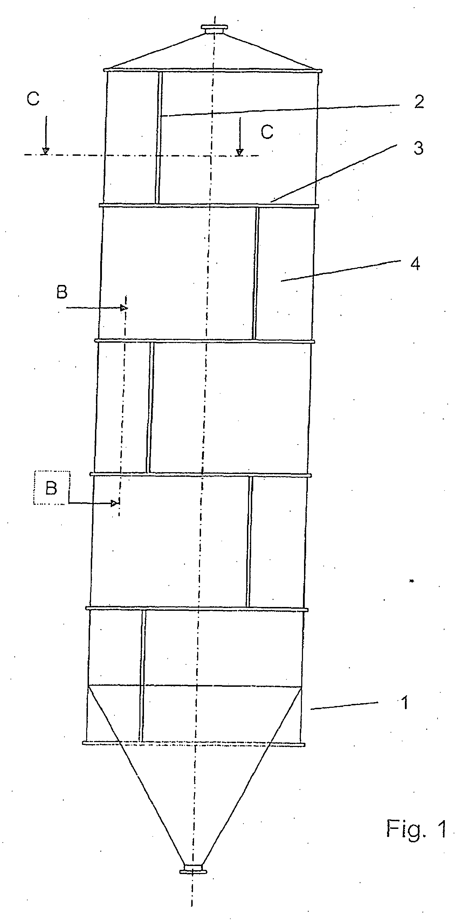

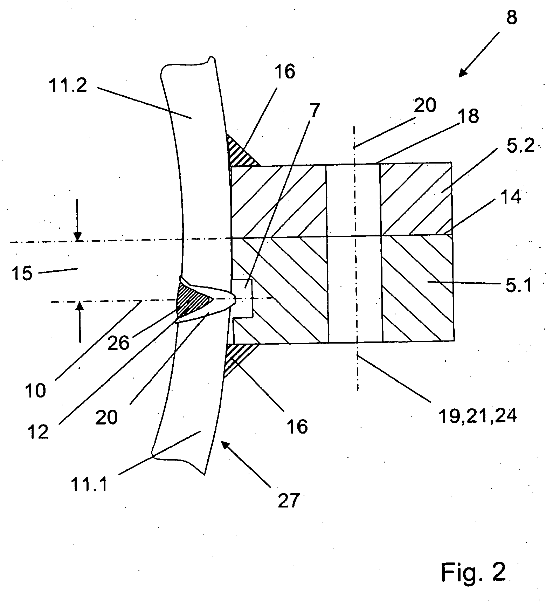

In Figur 2 wird als Ausführungsbeispiel eine Vertikalflanschverbindung 8 dargestellt, die der vertikalen Verbindung 2 in Figur 1 entspricht. Hierbei stoßen die miteinander zu verbindenden Bleche 11.1 und 11.2 der Segmente 4 im Bereich einer Berührungsfläche 10 zusammen, wobei die erfindungsgemäße Schweißverbindung 26 im Bereich der Berührungsfläche 10 angebracht wird.

Erfindungsgemäß ist in diesem Bereich im Blech 11 eine Vertikalnut 12 angeordnet, die im Ausführungsbeispiel nach Figur 2 als im Querschnitt V-förmige Kerbe ausgebildet ist.

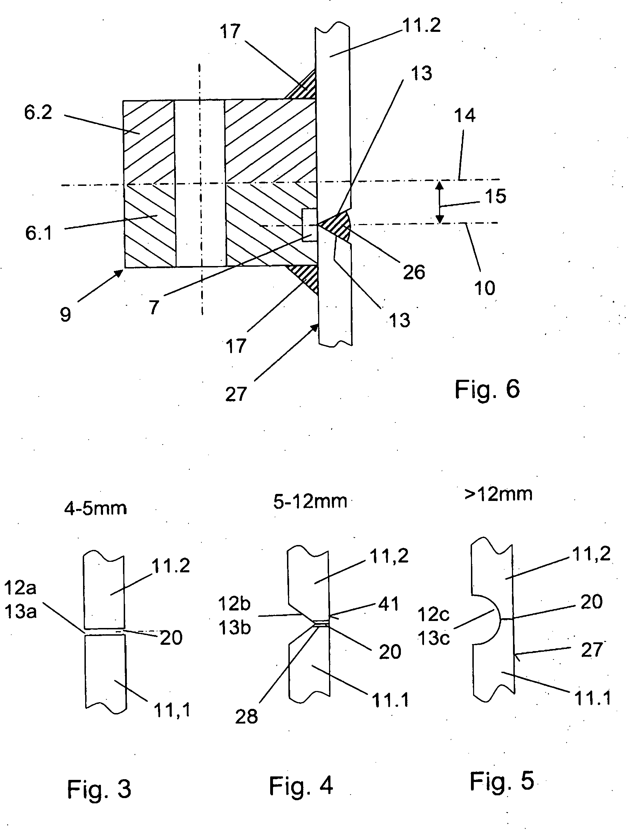

Die Figur 3 zeigt, dass anstatt einer V-förmigen Kerbe bei dünnwandigen Blechen 11 auch eine stumpfe Verbindung für eine Vertikalnut 12a vorgesehen werden kann. Weil diese Verbindung auch anhand einer im Zusammenhang mit Figur 6 zu beschreibenden Umfangsflanschung verwendet werden kann, wird gleichzeitig auch ausgeführt, dass diese Verbindung genauso auch für die später zu beschreibende Rundnut 13 als stumpfe Form 13a gültig ist.

Dementsprechend kann in Bezug auf die Figur 2 und 6 angeführt werden, dass die Vertikalnut 12 und die Rundnut 13 entweder V-förmig profiliert sein können oder stumpf (siehe Figur 3) oder als V-förmige Nut, wobei sich der Grund des V-Profils bis zur Außenfläche 27 erstrecken kann, oder noch ein vertikaler Steg 28 verbleiben kann, wie Fig. 4 zeigt.

Wichtig ist bei anderen Ausführungsbeispielen, dass sich die später im Bereich dieser Vertikalnut 12 oder Rundnut 13 anzubringende Schweißnaht 26 mit ihrer Wurzel stets über die Außenfläche 27 hinaus erstreckt.

In Figur 5 ist dargestellt, dass die Vertikalnut 12 oder die Rundnut 13 auch als U-förmige Nut 12c oder 13c ausgebildet sein kann. Während eine stumpfe Nutausbildung 12a, 13a nach Figur 3 etwa für Blechstärken der Außenwände 11 von 4 bis 5mm bevorzugt wird, wird eine V-förmige Nutprofilierung der Nut 12b, 13b nach Figur 4 für Blechstärken im Bereich von etwa 5 bis 12 mm bevorzugt. Eine etwa U-förmige profilierte Vertikal- oder Rundnut 12c, 13c wird für Blechstärken im Bereich von mehr als 12 mm bevorzugt.

Die Flanschverbindung, mit welcher die Außenwände 11 des Behälters miteinander verbunden werden, besteht jeweils aus einem Flanschpaar bestehend aus den beiden Vertikalflanschen 5.1 und 5.2 bzw. den Ringflanschen 6.1 und 6.2, die sich beide im Bereich einer gemeinsamen Berührungsfläche 10 treffen. Die jeweils zu einer Flanschverbindung gehörenden Flansche 5.1 und 5.2 bzw. 6.1 und 6.2 weisen im wesentlichen die gleichen Abmessungen auf, können aber auch in der Dicke unterschiedlich ausgeführt werden, da nur in den Flanschen 5.1 und 6.2 die Nut 7 zur Aufnahme der Schweißnaht 26 verläuft.

Es wird bevorzugt, wenn die Nut 12 bzw. 13 etwa mittig zum Flansch 5.1 bzw. 6.1 angeordnet ist.

Im Bereich der beiden Vertikalflansche 6 ist eine quer hierzu verlaufende Bohrung 18 angeordnet, durch welche ein Verbindungselement 19 in Form einer Schraub- oder Nietverbindung hindurch greift. Alternativ können sämtliche anderen Verbindungen gewählt werden, wie z. B. Klebeverbindungen, Lötverbindungen, Klemmverbindungen, Clinchverbindungen und dergleichen mehr. Es kommt hierbei nicht darauf an, ob die Verbindungselemente 19 eine lösbare oder unlösbare Verbindung ausbilden.

Die Figur 6 zeigt eine vergleichbare Flanschverbindung, jedoch für eine horizontale Verbindung 3, d. h. für eine Flanschverbindung 9 bezüglich eines Ringflansches 6.

Wichtig ist im Ausführungsbeispiel nach Figur 2 und 6, dass die Berührungsfläche 10 zwischen den einander fluchtend anstoßenden Außenwänden 11 einen Versatz 15 zu der Berührungsfläche 10 der Flanschverbindungen 8, 9 aufweist.

Die Berührungsfläche 14 der Flanschverbindungen 8, 9 ist als gestrichelte Gerade in Figur 2 nach außen gezogen und zwischen dieser und der Berührebene 10 der Bleche ergibt sich der erfindungsgemäße Versatz 15. Der gleiche Versatz ergibt sich im Übrigen auch in der Figur 6, wo ebenfalls erkennbar ist, dass zwischen der Berührungsfläche 10 der Behälterwandbleche 11.1 und 11.2 und der Berührungsfläche 14 der Ringflansche 6 ein Versatz 15 vorhanden ist.

Wichtig hier ist auch, dass gegenüber der Berührungsebene 10 der Bleche 11 an der Außenseite des Behälters 1 fluchtend in der Flanschverbindung 8, 9 eine Nut 7 vorhanden ist, die der Badsicherung für die Schweißnaht 26 dient. Bei der Schweißnaht 26 kommt es lediglich zu einer Verbindung der Bleche 11.1 und 11.2 ohne dass es zu einer zusätzlichen Verbindung mit den Flanschen 5 bzw. 6 kommt. Diese Form der Schweißverbindung wird als zweiflächig bezeichnet.

Die Flansche 5, 6 sind durch Kehlnähte 17 an der Außenseite 27 des Behälters 1 angeschweißt.

Statt der Anbringung von Kehlnähten 17 können auch andere formschlüssige Verbindungen für die Anbringung der Vertikalflansche 5 und der Ringflansche 6 an der Behälterwand angewendet werden, wie z. B. Klebeverbindungen, Schraubverbindungen, Lötverbindungen, Klemmverbindungen und dergleichen mehr.

In Figur 7 ist als weiteres Ausführungsbeispiel gezeigt, dass der Versatz 15 vorhanden sein kann, dass aber zusätzlich hierzu noch eine formschlüssige Verbindung und ein formschlüssiges Ineinandergreifen der profilierten Flanschverbindung 21.

Die Figur 7 zeigt, dass der Vertikalflansch 21.1 einen sich in vertikaler Richtung erstreckenden Ringansatz 29 aufweist, der sich in eine zugeordnete formschlüssig daran anschließende Rundnut 30 hinein erstreckt, die an der Innenseite des jeweils gegenüber liegenden, anderen Flansches 21.2 angeordnet ist.

Nachdem die Flansche sowohl als Vertikalflansche 5 als auch als Ringflansche 6 ausgebildet sein können, kommt es lediglich darauf an, dass der eine Flanschteil mit einem entsprechenden Ringansatz 29 in die Rundnut 30 des gegenüber liegenden Flanschansatzes eingreift und in diesem Bereich der Schweißnahtwurzel 22 eingreift, so wie dies in Figur 7 dargestellt ist.

Es kann sich hierbei zwischen den ineinander greifenden Teilen ein Spalt 31 ergeben. Dabei würde aber eine evtl. auftretende Kerbwirkung die Schweißnaht nicht schwächen, weil die Kerbwirkung parallel oder tangential zur Behälterlängsachse auftreten würden, während die größte Belastung der Schweißnaht in Querschnittsebene des Behälters auftritt.

In einer anderen Ausführung kann der Spalt 31 auch entfallen und die beiden Teile können somit formschlüssig und lastübertragend ineinander greifen.

In den Figuren 8 und 9 ist als weiteres Ausführungsbeispiel dargestellt, dass - im Gegensatz zu den vorher beschriebenen Ausführungsbeispielen - eine fluchtende, also versatzfreie, Anordnung der Berührungsfläche 10 der Bleche 11 und der Berührfläche 14 der Flanschverbindung 5.1 und 5.2 bzw. 6.1 und 6.2 vorgesehen sein kann. Somit entfällt der Versatz 14, so dass die Berührungsfläche 10 zwischen den stirnseitig aneinander anstoßenden Außenwänden 11 fluchtend mit der Berührungsfläche 14 zwischen den Flanschverbindungen 5, 6 ausgebildet ist.

Durch diese Schweißnahtausführung mit der tiefer ausgeschweißten Schweißfuge, die fluchtend zur Berührungsebene der Flanschringe verläuft, wird die Schweißnaht zwar - im Gegensatz zu den vorherigen Ausführungsbeispielen - nicht prüffähig, aber erfüllt die Anforderung an eine höherwertige Schweißnaht, weil die Kerbwirkung an der Wurzel nicht mehr auftritt und die zusätzliche Schweißverbindung zwischen Teilen der Flansche 5.1 und 5.2 bzw. 6.1 und 6.2 erhöht die zu übertragenden Kräfte, wie in Versuchen nachgewiesen wurde.

Wichtig ist, dass fluchtend zu der Berührungsfläche 10 an der Behälterwand 11 eine vertiefte (Tiefe 24) Längs- oder Ringnut 7 vorhanden ist, die zur Aufnahme der vierflächigen Schweißnaht 26 dient, so dass mit dieser Schweißnaht 26 nicht nur die aneinander anstoßenden Bleche 11.1 und 11.2 miteinander verbunden werden, sondern auch noch die dazugehörenden Vertikalflansche 5.1 und 5.2 bzw. Ringflansche 6.1 und 6.2. Der Begriff "vierflächige Schweißnaht" bezieht sich dem entsprechen auf Schweißnähte, die sowohl die Bleche als auch die Flansche miteinander verbinden.

Die Figur 9 zeigt zusätzlich, dass am Grund der vierflächigen Schweißnaht 29 (im Bereich der Wurzel der Schweißnaht 26 und im Bereich der Flanschverbindung 5, 8) eine Rundnut 25 vorgesehen sein kann, welche die Kerbwirkung der Anlagefläche der beiden Flansche im Bereich der Berührungsfläche 14 verhindert. Die Rundnut 25 dient als Badsicherung der Schweißnaht und gleichzeitig als mechanische Entlastungsnut. für die Aufnahme der Kerbwirkung die ansonsten ohne die Rundnut 25 entstehen würde. Auch diese Verbindung erhöht die Wertigkeit einer tragenden Verbindung im Bereich des Behälters, obwohl deren Prüfbarkeit herabgesetzt ist.

Das gezeigte Ausführungsbeispiel soll dementsprechend nur die Möglichkeiten nach der Erfindung und deren Bedeutung zeigen.

Ausgangspunkt für eine Rissausbreitung vorliegt, wird damit die Qualität der Schweißnaht erhöht.

Alle beschriebenen Flanscharten und Formen sind gegeneinander austauschbar und dienen sowohl als Verbindung für Vertikalverbindungen als auch für Ringverbindungen und die einzelnen Flansche, wie sie in den Zeichnungen dargestellt sind, können so wohl rechts oder links oder auch oben oder unten angeordnet sein.

Damit sind alle Variationsmöglichkeiten nach den Ausführungsbeispielen beschrieben.

### Zeichnungslegende

| | | | |
|---|---|---|---|
| 1 | Rundbehälter | 18 | Bohrung |
| 2 | Vertikale Verbindung | 19 | Verbindungselement |
| 3 | Horizontale Verbindung | 20 | Berührfläche Wandbleche |
| 4 | Segment | 21 | Profilierte Flansche 21.1, 21.2 |
| 5 | Vertikalflansch 5.1, 5.2 | | |
| 6 | Ringflansch 6.1, 6.2 | 22 | Schweißnahtwurzel |
| 7 | Nut im Flansch zur Badsicherung | 23 | Grund der Profilierung |
| | | 24 | zusätzliche Triefe der Scheißnaht |
| 8 | Vertikalflanschverbindung | | |
| 9 | Ringflanschverbindung | 25 | Rundnut |
| 10 | Blechkante, Trennfuge der Bleche | 26 | Schweißnaht |
| | | 27 | Außenfläche des Behälters |
| 11 | Blech 11.1, 11.2 | | |
| 12 | Vertikalnut im Blech | 28 | vertikaler Steg |
| 13 | Rundnut im Blech | 29 | Ringansatz |
| 14 | Berührfläche der Flansche | 30 | Rundnut |
| 15 | Versatz | 31 | Ringspalt |
| 16 | Kehlnaht | 32 | Flanschverbindung |
| 17 | Kehlnaht | | |

## Patentansprüche

1. Behälter oder zylindrische Rohrstruktur mit Flanschverbindungen und geschweißter Innennaht, insbesondere zur Lagerung von festen oder fluiden Stoffen, bestehend aus einer Vielzahl von Segmenten (4), von denen jedes Segment (4) aus einem Blech (11) und außenseitigen Verbindungsflanschen (5, 6) besteht, wobei die einzelnen Segmente (4) über die durch die Verbindungsflansche (5, 6) gebildeten Flanschverbindungen (8, 9) miteinander verbunden sind und durch jeweils eine das jeweilige Wandblech (11) des Segmentes (4) verbindende, innenseitige Schweißnähte (26) verbunden sind, wobei ein Versatz (15) zwischen der Trennebene (14) der Flanschverbindung und der Trennebene (10) zwischen den Wandblechen (11) besteht und sich die Schweißnaht (26) in der Trennebene (10) zwischen den Wandblechen (11) befindet, **dadurch gekennzeichnet, dass** in mindestens einem der Flansche (5, 6) eine zur Schweißnaht (26) geöffnete Nut (7) angeordnet ist, in die sich die Schweißnaht (26) hinein erstreckt.

2. Behälter oder zylindrische Rohrstruktur nach Anspruch 1, **dadurch gekennzeichnet, dass** sich die Flansche (5, 6) auf der Innenseite des Behälters befinden und die Schweißung von der Außenseite erfolgt.

3. Behälter oder zylindrische Rohrstruktur nach Anspruch 1 oder 2, **dadurch gekennzeichnet, dass** der Behälter oder die zylindrische Rohrstruktur nicht einen runden, sondern polygonalen Querschnitt aufweisen.

4. Behälter oder zylindrische Rohrstruktur nach einem der Ansprüche 1 bis 3, **dadurch gekennzeichnet, dass** der Behälter oder die Rohrstruktur eine von der Zylinderform abweichende Form aufweist, vorzugsweise eine kegelförmige oder pyramidenförmige Form.

5. Behälter nach einem der Ansprüche 1 bis 4, **dadurch gekennzeichnet, dass** im Bereich des der Schweißnaht (26) zugeordneten Verbindungsflansches (5.1, 6.1) die zur Außenseite (27) gerichtete Nut (7) eine Schweißbadsicherung bildet.

6. Behälter nach einem der Ansprüche 1 bis 5, **dadurch gekennzeichnet, dass** die der Schweißnaht (26) zugeordnete Nut (7) etwa mittig auf Höhe des einen Verbindungsflansches (5.1, 6.1) angeordnet ist, (Fig. 2, 6).

7. Behälter nach einem der Ansprüche 1 bis 6, **dadurch gekennzeichnet, dass** die Flanschverbindung (32) aus in zwei zueinander senkrechten Ebenen ineinander greifenden Profilen besteht.

8. Behälter nach Anspruch 7, **dadurch gekennzeichnet, dass** die beiden Flansche (21. 2, 21.1) in den beiden zueinander senkrechten Ebenen einen annähernden Formschluss mit einem dazwischen liegenden Ringspalt (31) bilden.

9. Behälter nach einem der Ansprüche 7 oder 8, **dadurch gekennzeichnet, dass** der Ringspalt (31) zwischen den Flanschen (21.1, 21.2) in etwa rechtwinkelig im Bereich der Schweißnahtwurzel (22) auf die Trennfuge (10) zwischen den Blechen (11) trifft.

10. Behälter oder zylindrische Rohrstruktur mit Flanschverbindungen und geschweißter Innennaht, insbesondere zur Lagerung von festen oder fluiden Stoffen, bestehend aus einer Vielzahl von Segmenten (4), von denen jedes Segment (4) aus einem Wandblech (11) und außenseitigen Verbindungsflanschen (5, 6) besteht, wobei die einzelnen Segmente (4) über die durch die Verbindungsflansche (5, 6) gebildeten Flanschverbindungen (8, 9) miteinander verbunden sind und durch stirnseitig das jeweilige Wandblech (11) des Segmentes (4) verbindende innenseitige Schweißnähte (26) verbünden sind, **dadurch gekennzeichnet, dass** die beiden Flansche (5, 6) gemeinsam eine zur Schweißnaht (26) geöffnete Nut (7) ausbilden, und dass sich die Schweißnaht (26) in diese Nut (7) im Bereich der gemeinsamen Berührfläche (10, 14) der Verbindungsflansche (8, 9) hinein erstreckt, (Fig. 8, 9).

11. Behälter nach Anspruch 10, **dadurch gekennzeichnet, dass** die beiden Flansche (5, 6) gemeinsam eine zur Schweißnaht (26) geöffnete Nut (7) ausbilden, in die sich die Schweißnaht (26) hinein erstreckt, und dass dadurch eine zusätzliche Schweißnahtdicke (24) von 30 - 50% der Wandstärke der Bleche (11) entsteht.

12. Behälter nach einem der Ansprüche 10 oder 11, **dadurch gekennzeichnet, dass** in der Berührungsebene (14) der Verbindungsflansche (8, 9) am Grund der dort angeordneten, etwa V-förmigen Nut eine Rundnut (25) angeordnet ist.

13. Behälter nach einem der Ansprüche 1 bis 12, **dadurch gekennzeichnet, dass** der Flanschring des Verbindungsflansches (8, 9) der als Montagevorrichtung am Silo über Kehlnähte (16, 17) angeschweißt ist, ein tragender Bestandteil der Schweißnaht ist.

14. Behälter nach einem der Ansprüche 1 bis 13, **dadurch gekennzeichnet, dass** die Schweißnaht (26) zweiflächig oder vierflächig ausgebildet ist.

## Claims

1. Container or cylindrical pipe structure with flange connections and a welded internal seam, in particular for storage of solid or fluid substances, consisting of a plurality of segments (4), each segment (4) of which consists of a plate (11) and external connecting flanges (5, 6), wherein the individual segments (4) are connected with one another by means of the flange connections (8, 9) formed by the connecting flanges (5, 6) and are connected by in each case an internal weld seam (26) connecting the respective wall plate (11) of the segment (4), wherein there is an offset (15) between the dividing plane (14) of the flange connection and the dividing plane (10) between the wall plates (11), and the weld seam (26) is located in the dividing plane (10) between the wall plates (11),
**characterised in that** in at least one of the flanges (5, 6) there is arranged a groove (7) which is opened to wards the weld seam (26) and into which the weld seam (26) extends.

2. Container or cylindrical pipe structure according to claim 1, **characterised in that** the flanges (5, 6) are located on the inside of the container and the welding is carried out from the outside.

3. Container or cylindrical pipe structure according to claim 1 or 2, **characterised in that** the container or the cylindrical pipe structure does not have a round but has a polygonal cross-section.

4. Container or cylindrical pipe structure according to one of claims 1 to 3, **characterised in that** the container or the pipe structure has a shape deviating from the cylinder shape, preferably a conical or pyramidal shape.

5. Container according to one of claims 1 to 4, **characterised in that** in the region of the connecting flange (5.1, 6.1) associated with the weld seam (26), the groove (7) facing the outside (27) forms a weld backing.

6. Container according to one of claims 1 to 5, **characterised in that** the groove (7) associated with the weld seam (26) is arranged roughly centrally level with one connecting flange (5.1, 6.1), (Fig. 2, 6).

7. Container according to one of claims 1 to 6, **characterised in that** the flange connection (32) consists of profiles engaging in one another in two planes which are perpendicular to one another.

8. Container according to claim 7, **characterised in that** in the two planes which are perpendicular to one another the two flanges (21.2, 21.1) form a roughly form-locking connection with an annular gap (31) lying between them.

9. Container according to one of claims 7 or 8, **characterised in that** the annular gap (31) between the flanges (21.1, 21.2) impinges on the dividing joint (10) between the plates (11) roughly at right angles in the region of the weld seam root (22).

10. Container or cylindrical pipe structure with flange connections and a welded internal seam, in particular for storage of solid or fluid substances, consisting of a plurality of segments (4), each segment (4) of which consists of a wall plate (11) and external connecting flanges (5, 6), wherein the individual segments (4) are connected with one another by means of the flange connections (8, 9) formed by the connecting flanges (5, 6) and are connected by internal weld seams (26) connecting the respective wall plate (11) of the segment (4) at the end, **characterised in that** the two flanges (5, 6) together form a groove (7) which is opened towards the weld seam (26), and **in that** the weld seam (26) extends into this groove (7) in the region of the common contact face (10, 14) of the connecting flanges (8, 9), (Fig. 8, 9).

11. Container according to claim 10, **characterised in that** the two flanges (5, 6) together form a groove (7) which is opened towards the weld seam (26) and into which the weld seam (26) extends, and **in that** an additional weld seam thickness (24) of 30 - 50% of the wall thickness of the plates (11) is produced.

12. Container according to one of claims 10 or 11, **characterised in that** a round groove (25) is arranged in the contact plane (14) of the connecting flanges (8, 9) at the bottom of the roughly V-shaped groove located there.

13. Container according to one of claims 1 to 12, **characterised in that** the flange ring of the connecting flange (8, 9), which is welded to the silo as mounting device by means of fillet welds (16, 17), is a load-bearing part of the weld seam.

14. Container according to one of claims 1 to 13, **characterised in that** the weld seam (26) is formed with two faces or four faces.

## Revendications

1. Récipient ou structure tubulaire cylindrique avec des liaisons bridées et un cordon intérieur soudé, en particulier pour le logement de substances solides ou fluides, se composant d'une pluralité de segments (4), dont chaque segment (4) se compose d'une tôle (11) et de brides de liaison (5, 6) côté extérieur, les segments individuels (4) étant reliés entre eux par les liaisons bridées (8, 9) formées par les brides de liaison (5, 6), et reliés par respectivement un cordon de soudure (26) côté intérieur reliant la tôle de paroi respective (11) du segment (4), un déport (15) existant entre le plan de séparation (14) de la liaison bridée et le plan de séparation (10) entre les tôles de paroi (11) et le cordon de soudure (26) se trouvant dans le plan de séparation (10) entre les tôles de paroi (11), **caractérisé en ce qu'**une rainure (7) ouverte vers le cordon de soudure (26) étant agencée dans au moins une des brides (5, 6), dans laquelle rainure le cordon de soudure (26) s'étend.

2. Récipient ou structure tubulaire cylindrique selon la revendication 1, **caractérisé en ce que** les brides (5, 6) se trouvent sur le côté intérieur du récipient et la soudure est effectuée par le côté extérieur.

3. Récipient ou structure tubulaire cylindrique selon la revendication 1 ou 2, **caractérisé en ce que** le récipient ou la structure tubulaire cylindrique ne présentent pas de section transversale ronde mais polygonale.

4. Récipient ou structure tubulaire cylindrique selon l'une quelconque des revendications 1 à 3, **caractérisé en ce que** le récipient ou la structure tubulaire présente une forme divergeant de la forme cylindrique, de préférence une forme sphérique ou pyramidale.

5. Récipient selon l'une quelconque des revendications 1 à 4, **caractérisé en ce que** la rainure (7) dirigée vers le côté extérieur (27) forme un blocage de bain de soudure dans la zone de la bride de liaison (5.1, 6.1) associée au cordon de soudure (26).

6. Récipient selon l'une quelconque des revendications 1 à 5, **caractérisé en ce que** la rainure (7) associée au cordon de soudure (26) est agencée à peu près au milieu à hauteur d'une bride de liaison (5.1, 6.1) (figures 2, 6).

7. Récipient selon l'une quelconque des revendications 1 à 6, **caractérisé en ce que** la liaison bridée (32) se compose de profilés s'engageant les uns dans les autres dans deux plans perpendiculaires l'un à l'autre.

8. Récipient selon la revendication 7, **caractérisé en ce que** les deux brides (21.2, 21.1) forment dans les deux plans perpendiculaires l'un à l'autre une complémentarité de formes approximative avec une fente annulaire (31) se trouvant au milieu.

9. Récipient selon l'une quelconque des revendications 7 ou 8, **caractérisé en ce que** la fente annulaire (31) entre les brides (21.1, 21.2) rencontre, à peu près à angles doits dans la zone de la racine de cordon de soudure (22), le joint de séparation (10) entre les tôles (11).

10. Récipient ou structure tubulaire cylindrique avec des liaisons bridées et un cordon intérieur soudé, en particulier pour le logement de substances solides ou fluides se composant d'une pluralité de segments (4), dont chaque segment (4) se compose d'une tôle de paroi (11) et de brides de liaison (5, 6) côté extérieur, les segments individuels (4) étant reliés entre eux par les liaisons bridées (8, 9) formées par les brides de liaison (5, 6) et reliés par des cordons de soudure (26) côté intérieur reliant côté avant la tôle de paroi (11) respective du segment (4), **caractérisé en ce que** les deux brides (5, 6) réalisent ensemble une rainure (7) ouverte vers le cordon de soudure (26), et **en ce que** le cordon de soudure (26) s'étend dans cette rainure (7) dans la zone de la surface de contact (10, 14) commune des brides de liaison (8, 9) (figure 8, 9).

11. Récipient selon la revendication 10, **caractérisé en ce que** les deux brides (5, 6) réalisent ensemble une rainure (7) ouverte vers le cordon de soudure (26), dans laquelle le cordon de soudure (26) s'étend et **en ce que** ainsi, une épaisseur de cordon de soudure (24) supplémentaire de 30 à 50 % de l'épaisseur de paroi des tôles (11) apparaît.

12. Récipient selon l'une quelconque des revendications 10 ou 11, **caractérisé en ce qu'**une rainure ronde (25) est agencée dans le plan de contact (14) des brides de liaison (8, 9) sur le fond de la rainure qu'y est agencée, à peu près en forme de V.

13. Récipient selon l'une quelconque des revendications 1 à 12, **caractérisé en ce que** l'anneau bridé de la bride de liaison (8, 9) qui est soudé comme dispositif de montage sur le silo par des cordons de soudure d'angle (16, 17), est un élément porteur du cordon de soudure.

14. Récipient selon l'une quelconque des revendications 1 à 13 , **caractérisé en ce que** le cordon de soudure (26) est réalisé avec deux surfaces ou quatre surfaces.
